(19) Europäisches Patentamt
European Patent Office
Office européen des brevets

(11) **EP 1 909 480 B1**

(12) **FASCICULE DE BREVET EUROPEEN**

(45) Date de publication et mention
de la délivrance du brevet:
**17.09.2014 Bulletin 2014/38**

(51) Int Cl.:
***H04N 1/193*** *(2006.01)*    ***H04N 1/48*** *(2006.01)*

(21) Numéro de dépôt: **07019393.3**

(22) Date de dépôt: **03.10.2007**

(54) **Scanner à défilement**

Scanner mit Scrollfunktion

Sheetfed scanner

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **04.10.2006 FR 0608728**

(43) Date de publication de la demande:
**09.04.2008 Bulletin 2008/15**

(73) Titulaire: **MORPHO**
**92130 Issy Les Moulineaux (FR)**

(72) Inventeur: **Dufresne de Virel, François**
**75015 Paris (FR)**

(74) Mandataire: **Maillet, Alain**
**Cabinet Le Guen Maillet**
**5, place Newquay**
**B.P. 70250**
**35802 Dinard Cedex (FR)**

(56) Documents cités:
**EP-A- 0 932 296       EP-A- 1 528 814**
**EP-A1- 0 302 230      DE-A1- 19 835 348**
**JP-A- 2001 111 774    US-B1- 6 580 528**

**Description**

La présente invention concerne un scanner à défilement. L'invention trouve application dans le domaine de la numérisation à haute résolution de documents.

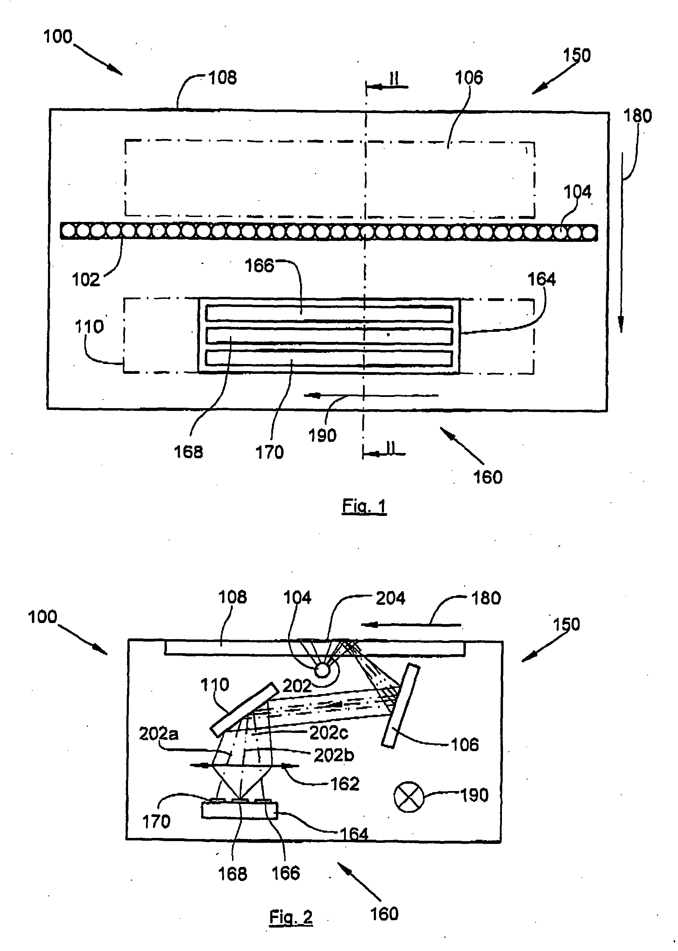

La Fig. 1 représente une vue de dessus d'un scanner à défilement 100 de l'état de la technique et la Fig. 2 représente une coupe du scanner à défilement 100 selon la ligne II-II de la Fig. 1.

Du fait de difficultés de représentation des différents éléments constituant un scanner à défilement, les trajets des faisceaux lumineux des différentes figures ne respectent pas forcément les lois de l'optique géométrique. Chaque faisceau lumineux prend sensiblement la forme d'une succession de cônes et le trajet du flux lumineux est plus particulièrement représenté par le trajet de son rayon moyen.

Un scanner à défilement 100 de l'état de la technique comprend une vitre 108 sur laquelle défile une feuille 204, un dispositif d'éclairage 102, un dispositif de focalisation 150 et un dispositif optique de capture ou module de détection 160.

La feuille 204 est plaquée contre la vitre 108 par des moyens de pression du type rouleau et est entraînée dans le sens de la flèche 180 par lesdits moyens de pression. Sur la feuille 204 sont imprimés des éléments en niveau de gris ou en couleur qui sont disposés sur un fond uniforme ou non.

Le dispositif d'éclairage 102 est constitué d'une barrette de diodes électroluminescentes 104. Le dispositif d'éclairage 102 émet un flux lumineux 202 de lumière blanche qui traverse la vitre 108 pour éclairer la feuille 204 à scanner et qui est réfléchi et diffusé par la feuille 204.

Le dispositif optique de capture ou module de détection 160 comprend un capteur du type capteur CCD 164 ("Charge Coupled Device"), CMOS (Complementary metal oxide semiconductor) ou équivalent. Le capteur CCD 164 est constitué de trois rangées 166, 168 et 170, chacune étant constituée d'une pluralité d'éléments sensibles, chacun délivrant une énergie électrique proportionnelle à l'intensité du flux lumineux qu'il reçoit. Chaque rangée 166, 168, 170 est sensible dans une bande spectrale différente des deux autres, appelée bande spectrale d'analyse de la rangée, chaque bande spectrale étant centrée autour d'une longueur d'onde spécifique $\lambda_1, \lambda_2, \lambda_3$, ces longueurs d'onde constituant le pic de sensibilité de chaque rangée. Les trois rangées 166, 168 et 170 sont disposées parallèlement à un axe 190. Chaque élément sensible de l'une des rangées est aligné avec un élément sensible de chacune des deux autres rangées, de manière à ce que ces trois éléments sensibles ainsi alignés forment une colonne.

Le dispositif de focalisation 150 est prévu pour former l'image d'une ligne de la feuille 204 sur le dispositif optique de capture ou module de détection 160 et, en particulier, pour focaliser, sur chacune des rangées 166, 168, 170, une partie du flux lumineux réfléchi par ladite feuille 204, en formant l'image de trois lignes parallèles de la feuille 204 sur ces trois rangées 166, 168 et 170.

Selon un mode de réalisation particulier, le dispositif d'éclairage 102 émet un flux lumineux 202 dont le spectre couvre lesdites trois bandes spectrales d'analyse des rangées 166, 168 et 170.

En particulier, dans le cas du capteur CCD référencé TCD2701C de Toshiba, ces longueurs d'onde sont voisines de 645 nm, 545 nm et 435 nm et, par convention, ces longueurs d'onde seront $\lambda_1=643{,}8nm$, $\lambda_2=546{,}1nm$ et $\lambda_3=435{,}8nm$. Ces valeurs de longueurs d'onde correspondent aux longueurs d'onde de référence pour lesquelles les caractéristiques des matériaux optiques (en particulier, l'indice de réfraction) sont connues, sachant que les erreurs introduites par ces approximations sont tout à fait négligeables et sans incidence sur le fonctionnement de la présente invention.

Lors du déplacement de la feuille 204, chaque ligne est éclairée par le flux lumineux incident 202 et son image est successivement focalisée sur les trois rangées 166, 168 et 170 du capteur CCD 164. Ainsi, la lecture complète d'une ligne est différée dans le temps puisqu'il est nécessaire d'attendre le passage de l'image de ladite ligne sur chacune des rangées 166, 168 et 170. Ainsi chaque ligne de la feuille 204 est successivement analysée par trois éléments sensibles ayant une sensibilité spectrale différente mais qui sont alignés sur la même colonne.

En particulier, le dispositif d'éclairage 102 éclaire la feuille avec le flux lumineux incident 202 et le système de focalisation 150 forme l'image, dans chacune desdites bandes d'analyse, de trois lignes différentes de la feuille 204 sur chacune des trois rangées 166, 168 et 170, cette focalisation étant représentée, pour chacune de ces bandes spectrales, par leurs rayons moyens 202a, 202b et 202c. Chaque rangée 166, 168, 170 est ainsi prévue pour recevoir l'un des flux 202a, 202b et 202c.

A cet effet, le dispositif de focalisation 150 comprend, par exemple, un premier miroir 106, un deuxième miroir 110 et une lentille 162. Chaque flux secondaire 202a, 202b, 202c se réfléchit sur la feuille 204, puis sur le premier miroir 106, puis sur le deuxième miroir 110, puis traverse la lentille 162 pour être focalisé vers le dispositif optique de capture ou module de détection 160. Cette représentation est une configuration possible mais d'autres peuvent exister (par exemple, il est possible de remplacer la lentille 162 en utilisant des miroirs 106 et 110 présentant de la puissance optique et permettant de réaliser cette fonction de focalisation).

Les différents éléments constituant le scanner à défilement 100 sont réglés de manière à ce qu'un flux secondaire 202a, 202b, 202c se focalise sur chacune des rangées 166, 168 et 170.

Un scanner à défilement 100 possède une grande vitesse d'acquisition de l'image de la feuille 204 du fait qu'aucun élément du scanner à défilement 100 n'est mobile, il n'est donc pas nécessaire de réinitialiser le scanner à défilement 100 entre deux feuilles 204 consécutives. Contrairement à un scanner à plat qui nécessite le placement de la feuille sur la vitre puis le déplacement du dispositif de focalisation et du dispositif optique de capture ou module de détection et enfin le retrait de la feuille et le repositionnement du dispositif de focalisation et du dispositif optique de capture ou module de détection.

Certaines applications nécessitent une résolution élevée qu'il est difficile de trouver sur les scanners à défilement de l'état de la technique, sauf à utiliser un scanner à défilement ayant un prix très élevé. Par exemple, dans le cas d'une numérisation systématique de fiches de données biométriques (empreintes, iris, ...), il est intéressant que l'image numérisée soit la plus précise possible et la plus conforme géométriquement à l'image scannée (minimisation de la distorsion), que le coût des scanners utilisés soient le plus bas possible et que la vitesse de traitement des documents soit la plus rapide possible, le but étant de traiter un maximum de documents dans un minimum de temps et d'espace, pour un coût aussi bas que possible. Cela est possible avec les scanners existants à ce jour si leur résolution peut être améliorée d'un facteur typique de deux à trois en résolution.

Afin d'augmenter la résolution d'un tel scanner à défilement 100 dans le sens de déplacement 180 de la feuille, il est possible de modifier la vitesse de défilement de la feuille 204 en modifiant la vitesse de rotation du moteur qui entraîne la feuille 204 par l'intermédiaire des moyens de pression. Par exemple, au lieu de faire avancer la feuille entre chaque mesure de la valeur équivalente à la taille d'un élément sensible, on ne fait l'avance que de la moitié, ce qui permet de relever un nombre double de données sur chaque page. On réalise ainsi une augmentation de résolution par sur-échantillonnage.

Du fait du sens de déplacement de la feuille 204, cette méthode d'augmentation de la résolution ne peut pas s'appliquer dans la direction orthogonale au sens de déplacement 180 de la feuille 204. Afin d'augmenter la résolution d'un scanner à défilement 100 dans la direction orthogonale au sens de déplacement 180 de la feuille 204, différentes solutions ont été proposées. On peut tout d'abord faire tourner l'axe du capteur 164 par rapport à la direction de défilement, mais cela conduit, pour les gains recherchés, à une perte trop importante et donc non acceptable de la zone utile scannée, du fait du grand angle de rotation nécessaire. D'autres méthodes plus évoluées ont été proposées. On peut citer par exemple, l'utilisation de capteurs CCD ayant une géométrie particulière comme décrit dans le document US-A-6,046,772. On peut également citer le document US-A-2003/0193567 qui divulgue une méthode de balayage nécessitant le déplacement de la feuille ou du capteur CCD. Le document JP-A-59-174085 divulgue une méthode d'augmentation de résolution par mise en vibration du capteur CCD.

Ces différentes solutions doivent être prises en compte dès le début de la conception du scanner et sont difficilement adaptables sur un scanner à défilement déjà existant. En particulier, ces solutions entraînent soit de grandes modifications des éléments constituant le scanner à défilement 100 ce qui est coûteux, soit la mise en place d'éléments mobiles ce qui augmente le temps nécessaire pour scanner une feuille 204, ces éléments mobiles devant être déplacés pour l'analyse de chaque ligne de la feuille 104.

En particulier, le document DE-A-198 35 348 divulgue un scanner dont le capteur CCD est modifié représentant un surcoût important par rapport à un scanner non modifié.

Le document EP-A-1 528 814 divulgue un dispositif de capture d'images vidéo qui prévoit une augmentation de la résolution par utilisation d'un prisme. La mise en place d'un prisme induit une modification substantielle de la direction de propagation des faisceaux d'un ordre de grandeur supérieur à l'effet de séparation spectrale de ceux-ci. Cela induit donc une modification notable de l'architecture du dispositif de capture, le capteur n'étant plus parallèle à l'objectif de focalisation.

L'effet secondaire induit de ce non parallélisme/perpendicularité est que cela introduit une distorsion géométrique entre l'image à capturer le résultat obtenu, ce qui va à l'encontre du résultat recherché d'obtenir une image numérique de haute résolution et fidèle à l'image à capturer.

Un objet de la présente invention est de proposer un scanner à défilement dont la résolution dans la direction orthogonale au sens de déplacement de la feuille est augmentée et qui ne présente pas les inconvénients de l'état de la technique et qui, en particulier, permet d'augmenter la résolution d'un scanner à défilement dans la direction orthogonale au sens de déplacement de la feuille à un faible coût et en évitant l'augmentation du temps nécessaire pour scanner ladite feuille.

A cet effet, est proposé un scanner à défilement comprenant :

- un dispositif d'éclairage prévu pour émettre un flux lumineux à plusieurs bandes spectrales destiné à éclairer une feuille à scanner,
- un dispositif de focalisation et,
- un module de détection comprenant un capteur qui comprend une pluralité de rangées d'éléments sensibles, chaque élément sensible étant prévu pour délivrer une énergie électrique proportionnelle à l'intensité du flux lumineux reçu, et chaque rangée étant prévue pour présenter son pic de sensibilité pour l'une desdites bandes spectrales, chaque élément sensible de l'une des rangées étant aligné avec un élément sensible de chacune des deux autres rangées, de manière à ce que ces trois éléments sensibles ainsi alignés forment une colonne,

le dispositif de focalisation étant prévu pour focaliser, sur chacune des rangées, une partie du flux lumineux réfléchie par ladite feuille,
le scanner à défilement étant tel que le module de détection comprend un dispositif optique de décalage spectral fixe prévu pour décaler chaque partie du flux lumineux ainsi focalisé, parallèlement auxdites rangées, le décalage étant différent pour chaque rangée.

Avantageusement, le capteur comprend trois rangées et par rapport au premier flux décalé, le deuxième flux décalé est décalé d'environ un tiers d'élément sensible, et le troisième flux décalé est décalé d'environ deux tiers d'élément sensible.

Avantageusement, le scanner à défilement comprend un filtre passe bande pour lesdites bandes spectrales.

Selon un mode de réalisation particulier, le dispositif de décalage spectral est constitué d'une lame optique inclinée par rapport au plan du capteur.

Selon un autre mode de réalisation particulier, le dispositif de décalage spectral est constitué d'une lame optique sur l'une des faces de laquelle est réalisée une succession de microsillons à section prismatique, dont l'axe est orienté perpendiculairement à la direction de déviation recherchée, appelés «microprismes» dans la suite du document.

Avantageusement, l'autre face de la lame optique portant la succession de microprismes est en contact avec le capteur.

Avantageusement, chaque microprisme est disposé au dessus d'un nombre entier d'éléments sensibles et uniquement d'éléments sensibles entiers.

Selon un autre mode de réalisation particulier, le dispositif de décalage spectral est constitué d'un élément diffractif placé à distance du capteur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente une vue de dessus d'un scanner à défilement de l'état de la technique,
la Fig. 2 représente une coupe du scanner à défilement selon la ligne II-II de la Fig. 1,
la Fig. 3 représente une vue de dessus d'un scanner à défilement selon l'invention,
la Fig. 4 représente une coupe du scanner à défilement selon la ligne IV-IV de la Fig. 3,
la Fig. 5 représente une coupe selon la ligne V-V de la Fig. 4 et un agrandissement d'un module de détection selon un premier mode de réalisation de l'invention,
la Fig. 6 représente un agrandissement de la zone VI de la Fig. 5,
la Fig. 7 représente un module de détection selon un deuxième mode de réalisation de l'invention et,
la Fig. 8 est une vue équivalente à celle de la Fig. 6, pour le module de détection selon le deuxième mode de réalisation de l'invention.

Les éléments de l'invention qui sont identiques aux éléments de l'état de la technique portent les mêmes références.

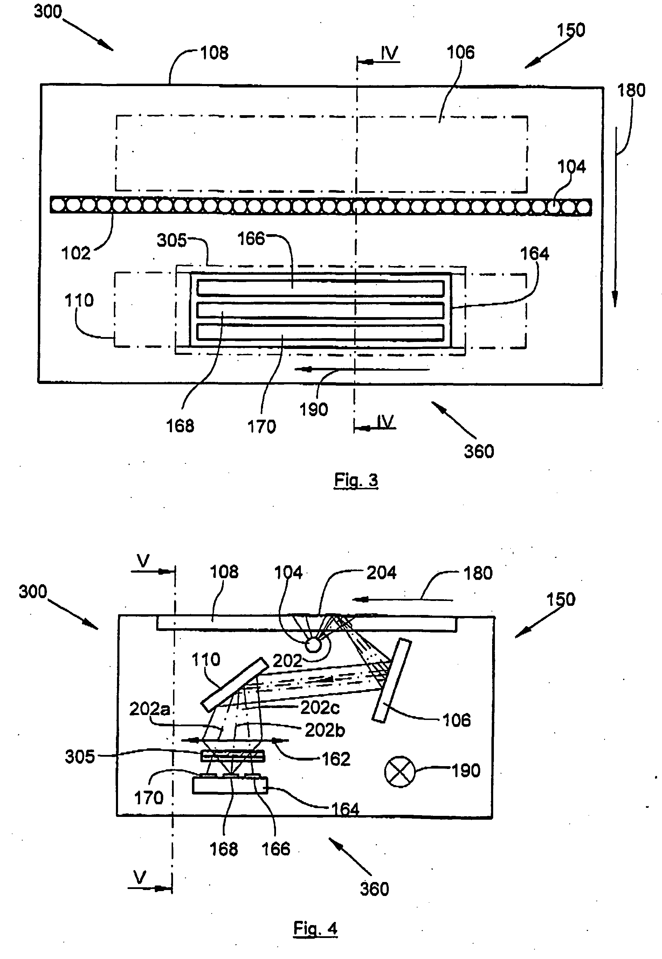

La Fig. 3 est une vue de dessus d'un scanner à défilement 300 selon l'invention qui comprend une vitre 108 sur laquelle défilent une feuille 204, un dispositif d'éclairage 102, un dispositif de focalisation 150 et un dispositif optique de décalage ou module de détection 360.

En plus des éléments déjà décrits pour le scanner à défilement de l'état de la technique, le scanner à défilement 300 de l'invention et, en particulier, le dispositif optique de décalage ou module de détection 360 comprend un dispositif de décalage spectral non prismatique 305 prévu pour décaler chaque partie du flux focalisé, parallèlement aux rangées 166, 168, 170, le décalage $\delta_1, \delta_2$ étant différent pour chaque partie du flux focalisé, c'est-à-dire pour chaque rangée 166, 168, 170.

Ainsi, le scanner à défilement 300 comprend :

- le dispositif d'éclairage 102 prévu pour émettre un flux lumineux à plusieurs bandes spectrales $\lambda_1, \lambda_2, \lambda_3$ destiné à éclairer la feuille 204 à scanner,
- le dispositif de focalisation 150, et
- le dispositif optique de décalage ou module de détection 360 comprenant le capteur 164 qui comprend, la pluralité de rangées 166, 168, 170 d'éléments sensibles, chaque élément sensible étant prévu pour délivrer une énergie électrique proportionnelle à l'intensité du flux lumineux reçu, et chaque rangée étant prévue pour présenter son pic de sensibilité pour l'une desdites bandes spectrales,

le dispositif de focalisation étant prévu pour focaliser, sur chacune des rangées, une partie du flux lumineux réfléchi par ladite feuille.

Le scanner à défilement 300 est tel que le dispositif optique de décalage ou module de détection 360 comprend le dispositif de décalage spectral 305 non prismatique prévu pour décaler, chaque partie du flux lumineux ainsi focalisé, parallèlement auxdites rangées 166, 168, 170, le décalage $\delta_1, \delta_2$ étant différent pour chaque rangée 166, 168, 170.

Par convention, le décalage $\delta_1, \delta_2$ d'un flux est compté positivement dans le sens de l'axe 190 et négativement dans le sens opposé, c'est-à-dire que le décalage $\delta_1, \delta_2$ d'un flux est compté positivement lorsque ce flux est déplacé dans le sens de l'axe 190 et négativement lorsque ce flux est déplacé dans le sens opposé. Deux décalages $\delta_1, \delta_2$ sont différents s'ils sont de signes opposés ou si, en étant de même signe, les valeurs de leurs amplitudes absolues sont différentes. Le but est de décaler les différents flux lumineux les uns par rapport aux autres de manière à ce qu'aucun d'eux ne soit aligné avec l'un des autres.

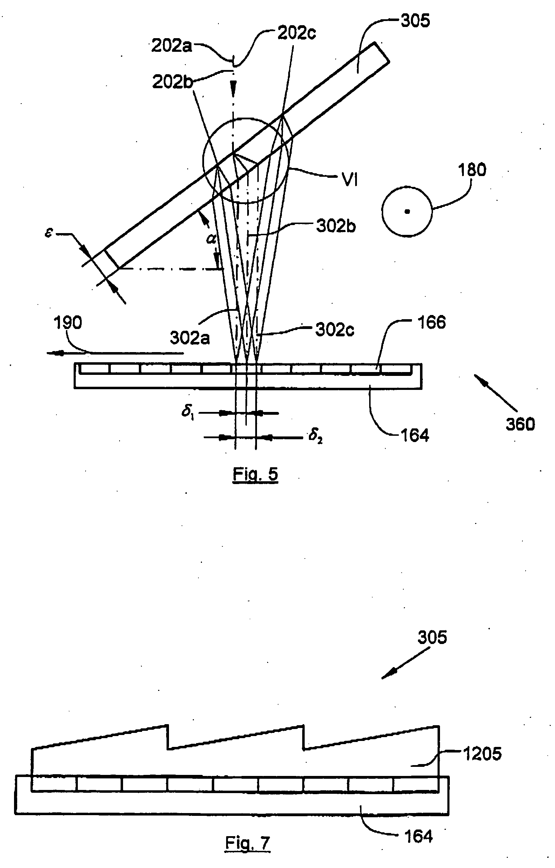

Selon un premier mode de réalisation de l'invention, le dispositif de décalage spectral 305 se présente sous la forme d'une lame optique inclinée d'épaisseur $\varepsilon$, comme cela est mieux vu sur la Fig. 5 qui représente une coupe du dispositif optique de décalage 360 selon la ligne V-V de la Fig. 4.

Selon un deuxième mode de réalisation de l'invention, le dispositif de décalage spectral 305 se présente sous la forme d'une lame optique 705 sur l'une des faces de laquelle est réalisée une succession de microsillons à section prismatique, dont l'axe est orienté perpendiculairement à la direction de déviation recherchée, appelés «microprismes», comme cela est mieux vu sur la Fig. 7.

Le dispositif de décalage spectral 305 peut être réalisé en verre ou en un matériau plastique. On citera par exemple les matériaux suivants BK7, SF11, Plexiglas, Polycarbonate ou autres, du moment que le matériau choisi présente les caractéristiques recherchées : transparence dans le spectre de fonctionnement du capteur 164, qualité «optique» du matériau, dispersion chromatique adaptée.

Comme cela est mieux vu sur la Fig. 4, le dispositif de décalage spectral 305 est placé entre la lentille 162 et le capteur CCD 164. Les flux secondaires 202a, 202b et 202c traversent le dispositif de décalage spectral 305 avant de se focaliser sur le capteur CCD 164. Le dispositif de décalage spectral 305 est placé au plus près du capteur CCD afin de limiter les aberrations générées.

Le dispositif optique de décalage ou module de détection 360 comprend ainsi le capteur CCD 1.64 et le dispositif de décalage spectral 305.

Du fait de l'introduction du dispositif de décalage spectral 305, la focalisation de chaque flux secondaire 202a, 202b, 202c sur la rangée 166, 168, 170 correspondante peut être perturbée. Un réglage approprié du dispositif de focalisation 150 et du dispositif optique de décalage 360 permet de rétablir une bonne focalisation de chaque flux secondaire 202a, 202b, 202c sur la rangée 166, 168, 170 correspondante. Ce réglage doit être fait une seule fois pour chaque scanner à défilement 300 ainsi modifié et est effectué de la même manière que celui qui est effectué, dans le cas d'un scanner à défilement 100 de l'état de la technique, pour régler la focalisation de chaque flux secondaire 202a, 202b, 202c sur la rangée 166, 168, 170 correspondante.

En outre, le temps nécessaire pour scanner une feuille 204 est identique au temps nécessaire pour un scanner à défilement 100 de l'état de la technique puisqu'aucun élément mobile n'a été introduit dans le scanner à défilement 100 de l'invention.

Dans le cas du premier mode de réalisation de l'invention, la lame optique 305 est inclinée selon un angle $\alpha$ par rapport à l'horizontal, c'est-à-dire par rapport au plan du capteur CCD 164.

Chaque flux secondaire 202a, 202b, 202c traverse la lame optique 305 et en ressort sous la forme d'un flux secondaire décalé respectivement référencé 302a, 302b, 302c. En effet, le fait de l'inclinaison de la lame optique 305, le fait que chaque faisceau secondaire 202a, 202b, 202c est constitué de différentes longueurs d'onde, impliquent du fait des lois de l'optique géométrique, l'apparition d'un décalage entre les flux secondaires décalés 302a, 302b et 302c. Le décalage est continu en fonction de la longueur d'onde et c'est la position moyenne de l'image, correspondant à la bande spectrale considérée qui est représentée ici.

Ainsi pour une ligne de la feuille 204, le premier flux secondaire décalé 302a se focalise sur la rangée 166, et après un premier déplacement de la feuille 204, le deuxième flux secondaire décalé 302b se focalise sur la rangée 168 avec un décalage $\delta_1$ par rapport au premier flux secondaire décalé 302a et ceci dans la direction orthogonale à la direction de déplacement 180 de la feuille 204, c'est-à-dire parallèlement à l'orientation des rangées 166, 168 et 170 d'éléments sensibles du capteur CCD 164.

Pour la même ligne de la feuille 204 et après un deuxième déplacement de la feuille 204, le troisième flux secondaire décalé 302c se focalise sur la rangée 170 avec un décalage $\delta_2$ par rapport au premier flux secondaire décalé 302a et ceci dans la direction orthogonale à la direction de déplacement 180 de la feuille 204.

Avantageusement, le décalage $\delta_1$, $(\delta_2 - \delta_1)$ entre deux flux secondaires décalés consécutifs 302a-302b, 302b-302c est sensiblement égal au tiers de la dimension dans la direction de décalage d'un élément sensible, c'est-à-dire au tiers de la dimension du pixel du capteur CCD 164 parallèlement à l'axe 190.

Comme cela est expliqué ci-après, le décalage de chaque flux secondaire 202a, 202b, 202c permet d'augmenter la résolution dans le sens orthogonal à la direction de déplacement 180 de la feuille 204.

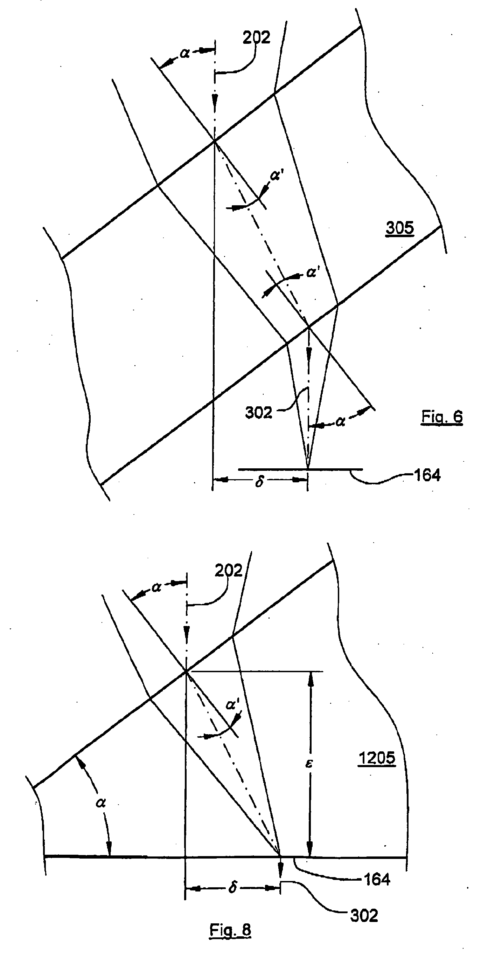

La Fig. 6 permet de calculer le décalage δ propre à chaque longueur d'onde, c'est-à-dire entre le flux secondaire 202 et le flux secondaire décalé 302 correspondant. Le décalage $\delta_1$, $(\delta_2-\delta_1)$ entre deux flux secondaires décalés consécutifs 302a-302b, 302b-302c est alors calculé par différence entre les décalages δ propres aux longueurs d'onde correspondantes.

A l'aide des lois de l'optique géométrique, on obtient :

$$\delta = \varepsilon \cdot \frac{\sin(\alpha - \alpha')}{\cos \alpha'}.$$

L'angle α' est dépendant de la longueur d'onde du flux secondaire 202 et du matériau constituant la lame optique 305.

La longueur d'onde de chaque flux secondaire 202a, 202b, 202c qui est prise en compte est de préférence celle qui est centrée sur le pic de sensibilité de la rangée 166, 168, 170 considérée. Par exemple, dans le cas où le capteur CCD est le capteur référencé TCD2701C de Toshiba, la longueur d'onde du premier flux secondaire 202a est centrée sur la valeur $\lambda_1$=643,8$nm$, la longueur d'onde du premier flux secondaire 202b est centrée sur la valeur $\lambda_2$=546,1$nm$ et la longueur d'onde du troisième flux secondaire 202c est centrée sur la valeur $\lambda_3$=435,8$nm$.

Des exemples d'applications numériques sont listés dans le tableau suivant. Les valeurs numériques sont déterminées pour le capteur choisi (ici le capteur TCD2701C de Toshiba), et sont données à titre d'illustration mais elles doivent être adaptées si un autre capteur est choisi.

| Matériau | BK7 | SF11 | Plexiglas | Polycarbonate |
|---|---|---|---|---|
| ε en mm | 10 | 5 | 9 | 5,5 |
| α en degré | 7 | 5 | 7 | 5,5 |
| α' en rad pour $\lambda_1$ | 0.08054 | 0,04906 | 0.08191 | 0.06067 |
| α' en rad pour $\lambda_2$ | 0,08033 | 0,04866 | 0,08167 | 0,06031 |
| α' en rad pour $\lambda_3$ | 0,07991 | 0,04777 | 0.08119 | 0,05951 |
| δ en μm pour $\lambda_1$ | 417.53 | 191,23 | 363,53 | 194.58 |
| δ en μm pour $\lambda_2$ | 419.65 | 193.22 | 365,61 | 196.56 |
| δ en μm pour $\lambda_3$ | 423,84 | 197,66 | 369,92 | 200,96 |
| $\delta_1$ en μm | -2,12 | -1.99 | -2,08 | -1,97 |
| $(\delta_2-\delta_1)$ en μm | -4.19 | -4,43 | -4,31 | -4,41 |
| $\delta_2$ en μm | -6,32 | -6,42 | -6,39 | -6.38 |

Dans le cas de l'utilisation d'un capteur CCD dont chaque élément sensible a une taille de 9,325 μm sur 9,325 μm, comme par exemple, le capteur CCD référencé TCD2701C de Toshiba, le décalage $\delta_1$ correspond sensiblement au tiers de 9,325 μm (i.e.: 3.108 μm) dans le sens opposé à l'axe 190, et le décalage $\delta_2$ correspond sensiblement au deux tiers de 9,325 μm (i.e.: 6,217 μm) dans le sens opposé à l'axe 190.

Afin d'obtenir un décalage d'un tiers de pixel, il est préférable que le décalage $\delta_1$ s'approche de 3,1 μm et que le décalage $\delta_2$ s'approche de 6,2 μm. Mais même si les décalages $\delta_1$ et $\delta_2$ s'éloignent de ces valeurs, l'invention peut fonctionner tant que les décalages sont significatifs par rapport aux dimensions des éléments sensibles.

Le procédé de détermination des caractéristiques physiques de la lame optique 305 se décompose en :

- une étape de détermination de chaque longueur d'onde $\lambda_1,\lambda_2,\lambda_3$ correspondant à un pic de sensibilité du capteur CCD 164 utilisé,
- une étape de sélection d'un matériau de base prévu pour réaliser la lame optique 305,
- une étape de calcul de chaque décalage $\delta_1$, $\delta_2$ à partir du matériau sélectionné, en fonction de l'épaisseur et de l'inclinaison de la lame optique 305,
- une étape d'optimisation de l'épaisseur et de l'inclinaison de la lame optique 305 afin que chaque décalage $\delta_1$, $\delta_2$ converge vers le décalage optimum, par exemple un tiers et deux tiers de pixel.

Pour limiter les aberrations optiques, il est préférable que l'inclinaison reste inférieure à 10°.

Au cours de l'étape d'optimisation, des décalages $\delta_1$ et $\delta_2$ trop importants peuvent être réduits par diminution de l'épaisseur et/ou de l'inclinaison de la lame optique 305, ou le choix d'un matériau moins dispersif.

A l'inverse, si les décalages $\delta_1$ et $\delta_2$ sont trop faibles, ils peuvent être augmentés par augmentation de l'épaisseur et/ou de l'inclinaison de la lame optique 305, ou le choix d'un matériau plus dispersif.

La lame optique doit être relativement épaisse pour que l'effet de dispersion chromatique soit suffisant pour obtenir le décalage recherché. Pour le capteur cité en exemple, dont la longueur est de l'ordre de 90 mm, le ratio épaisseur sur longueur de la lame doit être supérieur à un vingtième. Pour minimiser les autres aberrations optiques causées par la lame, ce ratio devra rester inférieur à un neuvième

Dans le cas du deuxième mode de réalisation de l'invention, la face de la lame optique 705 qui ne porte pas la succession de microprismes repose sur le capteur CCD 164, c'est-à-dire que cette face de la lame optique 705 est en contact avec le capteur 164. Chaque microprisme présente ici une section triangulaire dont l'un des côtés présente un angle $\alpha$ par rapport à l'horizontal, c'est-à-dire par rapport au plan du capteur CCD 164, et dont un autre côté est vertical, c'est-à-dire orthogonal au plan du capteur 164.

Pour réaliser cette lame optique munie de microprismes, il est possible de la réaliser par usinage direct de la lame. On peut aussi obtenir un résultat équivalent en utilisant une plaquette de microprismes de forme adaptée que l'on collerait sur une lame à faces parallèles, en choisissant des matériaux à indice homogène.

Afin de faciliter l'analyse des signaux reçus du capteur CCD 164, il est préférable que chaque coté vertical des microprismes soit aligné avec la limite entre deux éléments sensibles. En d'autres termes, chaque microprisme doit être disposé au dessus d'un nombre entier d'éléments sensibles et uniquement d'éléments sensibles entiers.

Comme pour le premier mode de réalisation de l'invention, chaque flux secondaire 202a, 202b, 202e traverse les microprismes et la lame optique 705 et en ressort sous la forme d'un flux secondaire décalé qui vient activer les éléments sensibles du capteur CCD 164.

Comme pour le premier mode de réalisation, le premier flux secondaire décalé et le deuxième flux secondaire décalé sont décalés de $\delta_1$, et le troisième flux secondaire décalé et le premier flux secondaire décalé sont décalés de $\delta_2$.

La Fig. 8 permet de calculer le décalage $\delta$ propre à chaque longueur d'onde, c'est-à-dire entre le flux secondaire 202 et le flux secondaire décalé 302 correspondant. Le décalage $\delta_1$, $(\delta_2-\delta_1)$ entre deux flux secondaires décalés consécutifs est alors calculé par différence entre les décalages $\delta$ propres aux longueurs d'onde correspondantes.

A l'aide des lois de l'optique géométrique, on obtient :

$$\delta = \varepsilon \cdot \tan(\alpha - \alpha').$$

Des exemples d'applications numériques pour les mêmes longueurs d'onde que précédemment sont listés dans le tableau suivant :

| Matériau | BK7 | SF11 | Plexiglas | Polycarbonate |
|---|---|---|---|---|
| $\varepsilon$ en mm | 10 | 5 | 9 | 5,5 |
| $\alpha$ en degré | 7 | 5 | 7 | 5,5 |
| $\alpha'$ en rad pour $\lambda_1$ | 0.08054 | 0,04906 | 0,08191 | 0,06067 |
| $\alpha'$ en rad pour $\lambda_2$ | 0,08033 | 0,04866 | 0,08167 | 0.06031 |
| $\alpha'$ en rad pour $\lambda_3$ | 0,07991 | 0,04777 | 0.08119 | 0,05951 |
| $\delta$ en $\mu$m pour $\lambda_1$ | 416,5337 | 191,1411 | 362,6083 | 194,3457 |
| $\delta$ en $\mu$m pour $\lambda_2$ | 418,6634 | 193,1386 | 364,6889 | 196,3233 |
| $\delta$ en $\mu$m pour $\lambda_3$ | 422,8682 | 197,5849 | 369,0105 | 200,7394 |
| $\delta_1$ en $\mu$m | -2,13 | -2,00 | -2,08 | -1,98 |
| $(\delta_2-\delta_1)$ en $\mu$m | -4,20 | -4,45 | -4,32 | -4.42 |
| $\delta_2$ en $\mu$m | -6,33 | -6,44 | -6,40 | -6,39 |

Le procédé de détermination des caractéristiques physiques des microprismes et de la lame optique 705 est conforme à celui décrit pour le premier mode de réalisation, sauf que l'inclinaison ne représente plus l'inclinaison de la lame optique mais l'angle de chaque microprisme.

Que ce soit pour le premier mode de réalisation ou pour le deuxième mode de réalisation de l'invention, chaque ligne scannée de la feuille 204 est décomposée en trois flux secondaires 202a, 202b, 202c qui sont chacun décalés sous la forme d'un flux secondaire décalé 302a, 302b, 302c. Chaque flux secondaire décalé 302a, 302b, 302e vient exciter les éléments sensibles de l'une des rangées 166, 168, 170 du capteur CCD 164.

L'image de la ligne scannée de la feuille 204 vient ainsi se former successivement sur chaque rangée 166, 168, 170 de manière décalée d'environ un tiers de pixel sur chacune de ces rangées 166, 168, 170.

Ensuite, après enregistrement de ces trois images primaires de la feuille, celles-ci peuvent être ensuite recombinées en calculant les caractéristiques de sous-pixels, de taille inférieure à celle des pixels du capteur (typiquement 3 sous-pixels par pixel dans l'exemple décrit, ces sous-pixels ayant une taille égale à un tiers de pixel) de façon à obtenir l'augmentation de résolution recherchée. Ces méthodes sont connues de l'homme du métier. On peut citer par exemple les brevets JP2002199248, EP1079330 ou EP1226508 en ce qui concerne la géométrie de chaque sous-pixel calculé ou encore les brevets EP0221111 ou EP1157538 si l'on considère plutôt l'aspect couleur du sous-pixel calculé.

Le décalage des flux secondaires décalés 302a, 302b, 302c permet donc d'augmenter la résolution du scanner à défilement 300 dans la direction orthogonale au sens de déplacement 180 de la feuille 204. La mise en place du dispositif de décalage spectral non prismatique 305 peut être facilement réalisée sur un scanner à défilement de l'état de la technique, c'est-à-dire que l'augmentation de la résolution du scanner à défilement 100 de l'état de la technique est facilement réalisée par l'ajout du dispositif de décalage spectral non prismatique 305 et ceci permet la réalisation d'un scanner à défilement avec une grande résolution et pour un coût réduit.

La mise en place du dispositif de décalage spectral non prismatique 305 permet d'augmenter la résolution du scanner à défilement 300 sans induire de distorsion ou d'aberrations optiques gênantes, car allant à l'encontre de l'effet d'augmentation de la résolution recherchée, par une dégradation notable de la qualité des images formées, comme cela se produirait dans le cas de l'utilisation d'un prisme en rayons convergents (c'est-à-dire entre l'objectif de focalisation et le capteur).

La résolution est ici multipliée par 3 du fait du décalage d'un tiers de pixel. Cette valeur peut être obtenue en modifiant les caractéristiques physiques du dispositif de décalage comme par exemple, ses dimensions, son matériau, son inclinaison, etc. L'optimisation du résultat est ainsi obtenue lorsque, par rapport au premier flux décalé 302a, le deuxième flux décalé 302b est décalé d'environ un tiers d'élément sensible, et le troisième flux décalé 302c est décalé d'environ deux tiers d'élément sensible, c'est-à-dire respectivement un tiers de pixel et deux tiers de pixel.

La méthode d'approximation peut, par exemple, affecter à chaque nouveau sous-élément sensible une valeur générée à partir de la couleur moyennée entre la valeur enregistrée par l'élément sensible correspondant et celle de ses voisins, éventuellement pondérée par la moyenne des trois composantes de façon à tenir compte de la valeur chromatique des éléments scannés, vis à vis du restant de l'image. On citera, par exemple, la demande de brevet EP-A-1 524 625 qui présente une méthode d'augmentation de la résolution d'une image.

Bien entendu, la présente invention n'est pas limitée aux exemples et modes de réalisation décrits et représentés, mais elle est susceptible de nombreuses variantes accessibles à l'homme du métier.

Par exemple, le dispositif de décalage spectral peut prendre la forme d'un élément diffractif, par exemple un réseau de diffraction. Celui-ci doit être disposé à une certaine distance du capteur CCD de manière à ce que la déviation générée pour chaque flux et qui est proportionnelle à cette distance, permette de créer un décalage voisin de ce qui est recherché.

Les miroirs peuvent être des miroirs ayant une puissance optique, et la mise en place de la lentille n'est alors plus nécessaire.

Afin de réduire les aberrations introduites par le dispositif de décalage spectral, un filtre passe bande pour lesdites bandes spectrales (ici 3 bandes) peut être mis en place sur le trajet optique en amont du capteur, ce filtre permettant alors de limiter le flux lumineux autour des pics de sensibilité du capteur et d'améliorer les images produites dans chaque bande spectrale en limitant les aberrations chromatiques du dispositif.

L'invention a été plus particulièrement décrite dans le cas d'un capteur comprenant trois rangées d'éléments sensibles, mais elle s'applique de la même façon pour tout capteur comprenant au moins deux rangées. De préférence, le décalage généré entre deux rangées consécutives par le dispositif de décalage spectral est voisin du rapport de la largeur d'un élément sensible sur le nombre de rangées. Par exemple, le capteur peut avoir quatre rangées, dont trois sont dédiées aux couleurs et dont l'une est dédiée aux niveaux de gris, le décalage est alors de préférence égal à un quart de la largeur d'un élément sensible. Par exemple, le capteur peut avoir deux rangées, l'une étant dédiée au spectre visible et l'autre au spectre infrarouge, le décalage est alors de préférence égal à la moitié de la largeur d'un élément sensible.

**Revendications**

**1.** Scanner à défilement (300) comprenant :

- un dispositif d'éclairage (102) prévu pour émettre un flux lumineux à plusieurs bandes spectrales ($\lambda_1$, $\lambda_2$, $\lambda_3$,) destiné à éclairer une feuille (204) à scanner,
- un dispositif de focalisation (150), et
- un module de détection (360) comprenant un capteur (164) qui comprend une pluralité de rangées (166, 168, 170) d'éléments sensibles, chaque élément sensible étant prévu pour délivrer une énergie électrique proportionnelle à l'intensité du flux lumineux reçu, et chaque rangée étant prévue pour présenter son pic de sensibilité pour l'une desdites bandes spectrales, chaque élément sensible de l'une des rangées étant aligné avec un élément sensible de chacune des deux autres rangées, de manière à ce que ces trois éléments sensibles ainsi alignés forment une colonne,

le dispositif de focalisation étant prévu pour focaliser, sur chacune des rangées, une partie du flux lumineux réfléchi par ladite feuille,
le scanner à défilement (300) étant **caractérisé en ce que** le module de détection (360) comprend un dispositif optique de décalage spectral fixe (305, 705) prévu pour décaler chaque partie du flux lumineux ainsi focalisé, parallèlement auxdites rangées (166, 168, 170), le décalage ($\delta_1$, $\delta_2$) étant différent pour chaque rangée (166, 168, 170).

2. Scanner à défilement (300) selon la revendication 1, **caractérisé en ce que** le décalage généré entre deux rangées consécutives par le dispositif de décalage spectral (305, 1205) est voisin du rapport de la largeur d'un élément sensible sur le nombre de rangées (166, 168, 170).

3. Scanner à défilement (300) selon l'une des revendications 1 ou 2, **caractérisé en ce que** le capteur comprend trois rangées (166, 168, 170) et **en ce que**, par rapport au premier flux décalé (302a), le deuxième flux décalé (302b) est décalé d'environ un tiers d'élément sensible, et le troisième flux décalé (302c) est décalé d'environ deux tiers d'élément sensible.

4. Scanner à défilement (300) selon l'une des revendications 1 à 3, **caractérisé en ce qu'**il comprend un filtre passe bande pour lesdites bandes spectrales.

5. Scanner à défilement (300) selon une des revendications 1 à 4, **caractérisé en ce que** le dispositif de décalage spectral est constitué d'une lame optique (305) inclinée ($\alpha$) par rapport au plan du capteur (164).

6. Scanner à défilement (300) selon une des revendications 1 à 4, **caractérisé en ce que** le dispositif de décalage spectral est constitué d'une lame optique (705) sur l'une des faces de laquelle est réalisée une succession de microprismes et **en ce que** l'autre face de la lame optique (705) portant la succession de microprismes est en contact avec le capteur (164).

7. Scanner à défilement (300) selon la revendication 6, **caractérisé en ce que** chaque microprisme est disposé au dessus d'un nombre entier d'éléments sensibles et uniquement d'éléments sensibles entiers.

8. Scanner à défilement (300) selon une des revendications 1 à 4, **caractérisé en ce que** le dispositif de décalage spectral est constitué d'un élément diffractif placé à distance du capteur (164).

**Patentansprüche**

1. Durchzugscanner (300), aufweisend:

- eine Beleuchtungsvorrichtung (102), vorgesehen zum Abgeben eines Lichtstroms mit mehreren Spektralbändern ($\lambda_1$, $\lambda_2$, $\lambda_3$), der dazu bestimmt ist, ein zu scannendes Blatt (204) zu beleuchten,
- eine Fokussierungsvorrichtung (150), und
- ein Erfassungsmodul (360), das einen Aufnehmer (164) aufweist, der eine Vielzahl von Reihen (166, 168, 170) von Sensorelementen aufweist, wobei jedes Sensorelement dafür vorgesehen ist, eine zu der Stärke des empfangenen Lichtstroms proportionale elektrische Energie zu liefern, und wobei jede Reihe dafür vorgesehen ist, ihren Empfindlichkeitsspitzenwert für eines der Spektralbänder darzustellen, wobei jedes Sensorelement einer der Reihen mit einem Sensorelement jeder der zwei anderen Reihen so ausgerichtet ist, dass diese drei so ausgerichteten Sensorelemente eine Spalte bilden,

wobei die Fokussierungsvorrichtung dafür vorgesehen ist, auf jede der Reihen einen Teil des Lichtstroms zu fokussieren, der von dem Blatt reflektiert wird,
wobei der Durchzugscanner (300) **dadurch gekennzeichnet ist, dass** das Erfassungsmodul (360) eine feststehende optische Spektralverschiebungsvorrichtung (305, 705) aufweist, die dafür vorgesehen ist, jeden Teil des so fokussierten Lichtstroms parallel zu den Reihen (166, 168, 170) zu verschieben, wobei die Verschiebung ($\delta_1$, $\delta_2$) für jede Reihe (166, 168, 170) verschieden ist.

2. Durchzugscanner (300) nach Anspruch 1, **dadurch gekennzeichnet, dass** die Verschiebung, die zwischen zwei aufeinanderfolgenden Reihen durch die Spektralverschiebungseinheit (305, 1205) erzeugt wird, dem Verhältnis der Breite eines Sensorelements zu der Anzahl von Reihen (166, 168, 170) benachbart ist.

3. Durchzugscanner (300) nach einem der Ansprüche 1 oder 2, **dadurch gekennzeichnet, dass** der Aufnehmer drei Reihen (166, 168, 170) aufweist und dadurch, dass in Bezug auf den ersten verschobenen Strom (302a) der zweite verschobene Strom (302b) um ungefähr ein Drittel eines Sensorelements verschoben wird und der dritte verschobene Strom (302c) um ungefähr zwei Drittel eines Sensorelements verschoben wird.

4. Durchzugscanner (300) nach einem der Ansprüche 1 bis 3, **dadurch gekennzeichnet, dass** er ein Bandpassfilter für die Spektralbänder aufweist.

5. Durchzugscanner (300) nach einem der Ansprüche 1 bis 4, **dadurch gekennzeichnet, dass** die Spektralverschiebungsvorrichtung aus einer optischen Platte (305) gebildet wird, die in Bezug auf die Ebene des Aufnehmers (164) um ($\alpha$) geneigt ist.

6. Durchzugscanner (300) nach einem der Ansprüche 1 bis 4, **dadurch gekennzeichnet, dass** die Spektralverschiebungsvorrichtung aus einer optischen Platte (705) gebildet ist, wobei auf einer ihrer Seiten eine Abfolge von Mikroprismen ausgeführt ist, und dadurch, dass die andere Seite der die Abfolge von Mikroprismen tragenden optischen Platte (705) in Kontakt mit dem Aufnehmer (164) steht.

7. Durchzugscanner (300) nach Anspruch 6, **dadurch gekennzeichnet, dass** jedes Mikroprisma über einer ganzen Zahl von Sensorelementen und ausschließlich ganzen Sensorelementen angeordnet ist.

8. Durchzugscanner (300) nach einem der Ansprüche 1 bis 4, **dadurch gekennzeichnet, dass** die Spektralverschiebungsvorrichtung aus einem Diffraktionselement gebildet ist, das im Abstand zum Aufnehmer (164) platziert ist.

**Claims**

1. Sheet-fed scanner (300) comprising:

   - an illumination device (102) for emitting a luminous flux covering several spectral bands ($\lambda_1$, $\lambda_2$, $\lambda_3$) which is intended to illuminate a sheet (204) to be scanned,
   - a focussing device (150), and
   - a detection module (360) comprising a sensor (164) which comprises a plurality of rows (166, 168, 170) of sensitive elements, each sensitive element being provided to deliver an electrical energy that is proportional to the intensity of the luminous flux received, and each row being provided to have its sensitivity peak for one of said spectral bands, each sensitive element of one of the rows being aligned with a sensitive element of each of the two other rows, in such way that these three sensitive elements so aligned form a column,

   the focussing device being provided to focus, onto each of the rows, a part of the luminous flux reflected by said sheet, the sheet-fed scanner (300) being **characterised in that** the detection module (360) comprises an optical spectral shift device (305, 705) for shifting each part of the luminous flux thus focussed, parallel to said rows (166, 168, 170), the shift ($\delta_1$, $\delta_2$) being different for each row (166, 168, 170).

2. Sheet-fed scanner (300) according to claim 1, **characterised in that** the shift generated between two consecutive rows by the spectral shift device (305, 1205) is close to the ratio of the width of one sensitive element to the number of rows (166, 168, 170).

3. Sheet-fed scanner (300) according to one of claims 1 or 2, **characterised in that** the sensor comprises three rows (166, 168, 170) and **in that**, relative to the first shifted flux (302a), the second shifted flux (302b) is shifted by approximately one-third of a sensitive element and the third shifted flux (302c) is shifted by approximately two-thirds of a sensitive element.

4. Sheet-fed scanner (300) according to one of claims 1 to 3, **characterised in that** it comprises a band-pass filter for said spectral bands.

5. Sheet-fed scanner (300) according to one of claims 1 to 4, **characterised in that** the spectral shift device consists of an optical wave plate (305) which is inclined ($\alpha$) with respect to the plane of the sensor (164).

6. Sheet-fed scanner (300) according to one of claims 1 to 4, **characterised in that** the spectral shift device consists of an optical wave plate (705), on one of the faces of which a succession of microprisms is formed and **in that** the other face of the optical wave plate (705) carrying the succession of microprisms is in contact with the sensor (164).

7. Sheet-fed scanner (300) according to claim 6, **characterised in that** each microprism is arranged above an integer number of sensitive elements and only above entire sensitive elements.

8. Sheet-fed scanner (300) according to one of claims 1 to 4, **characterised in that** the spectral shift device consists of a diffractive element placed at a distance from the sensor (164).

Fig. 1

Fig. 2

Fig. 3

Fig. 4

Fig. 5

Fig. 7

Fig. 6

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6046772 A
- US 20030193567 A
- JP 59174085 A
- DE 19835348 A
- EP 1528814 A
- JP 2002199248 B
- EP 1079330 A
- EP 1226508 A
- EP 0221111 A
- EP 1157538 A
- EP 1524625 A